(19) Europäisches Patentamt
European Patent Office
Office européen des brevets

(11) **EP 2 574 739 A1**

(12) **EUROPÄISCHE PATENTANMELDUNG**

(43) Veröffentlichungstag:
**03.04.2013 Patentblatt 2013/14**

(21) Anmeldenummer: **11183270.5**

(22) Anmeldetag: **29.09.2011**

(51) Int Cl.:
*F01K 3/12* (2006.01)  *F03D 9/00* (2006.01)
*F25B 9/00* (2006.01)  *F25B 27/00* (2006.01)
*F25B 30/02* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(71) Anmelder: **Siemens Aktiengesellschaft
80333 München (DE)**

(72) Erfinder:
• **Reznik, Daniel
13503 Berlin (DE)**
• **Stiesdal, Henrik
5000 Odense C (DK)**

(54) **Anlage zur Speicherung thermischer Energie und Verfahren zu deren Betrieb**

(57)     Die Erfindung betrifft eine Anlage zur Speicherung von thermischer Energie mit einem Wärmespeicher (14) und einem Kältespeicher (16). Weiterhin betrifft die Erfindung Verfahren zum Laden und Entladen dieser thermischen Speicher (14, 16). Mit der Anlage kann beispielsweise überschüssige elektrische Energie von Windkraftwerken (22) genutzt werden, um mittels eines Motors (M) mechanische Arbeit aus einem Verdichter (13) und einer Turbine (15) in thermische Energie umzuwandeln, die im Wärmespeicher (14) und Kältespeicher (16) für eine spätere Gewinnung von elektrischer Energie mit einem Generator (G) zur Verfügung gestellt wird. Erfindungsgemäß ist vorgesehen, dass beim Laden des Wärmespeichers (14) und des Kältespeichers (16) ein Zwischenspeicher für Wärme (12) entladen wird, der das Arbeitsgas für den Verdichter (13) auf beispielsweise 80°C vorwärmt. Hierdurch können im Wärmespeicher (14) Temperaturen von über 500°C auch durch eine Verdichtung des Arbeitsgases auf nur 15 bar erreicht werden. Verdichter zur Verdichtung von Arbeitsgasen auf 15 bar stellen hierbei vorteilhaft einen guten technischen Kompromiss dar. Werden der Wärmespeicher (14) und der Kältespeicher (16) über die Turbine (18) und den Verdichter (19) zwecks Gewinnung elektrischer Energie entladen, so kann der Zwischenspeicher (12) wieder aufgeladen werden, so dass die darin gespeicherte Wärme für einen anschließenden Ladeprozess des Wärmespeichers (14) und des Kältespeichers (16) wieder zur Verfügung gestellt werden kann.

FIG 1

EP 2 574 739 A1

**Beschreibung**

Die Erfindung betrifft eine Anlage zur Speicherung thermischer Energie, die einen Kreislauf für ein Arbeitsgas aufweist. Dabei werden in dem Kreislauf folgende Einheiten in der angegebenen Reihenfolge durch eine Leitung für das Arbeitsgas miteinander verbunden: eine erste thermische Fluidenergie-Maschine, ein Wärmespeicher, eine zweite thermische Fluidenergie-Maschine und ein Kältespeicher.
In Durchflussrichtung des Arbeitsgases vom Wärmespeicher zum Kältespeicher gesehen ist die erste ther Fluidenergie-Maschine als Arbeitsmaschine und die zweite thermische Fluidenergie-Maschine als Kraftmaschine geschaltet.

Weiterhin betrifft die Erfindung zwei Verfahren zum Betrieb dieser Anlage. Bei einem Verfahren zum Speicherung von thermischer Energie wird der Kreislauf in Richtung vom Wärmespeicher zum Kältespeicher durchlaufen, was der oben angegebenen Reihenfolge der Baueinheiten entspricht. Gemäß einem weiteren Verfahren, auf das sich die Erfindung ebenfalls bezieht, kann gespeicherte thermische Energie aus der Anlage auch umgewandelt werden, z. B. in mechanische Energie. Hierbei werden die Einheiten in umgekehrter Reihenfolge durchlaufen, mit anderen Worten wird die Durchflussrichtung des Arbeitsgases umgekehrt. Dieses passiert dann zuerst den Kältespeicher und dann den Wärmespeicher, wobei in diesem Fall die erste thermische Fluidenergie-Maschine als Kraftmaschine und die thermische Fluidenergie-Maschine als Arbeitsmaschine betrieben wird.

Die Begriffe Kraftmaschine und Arbeitsmaschine werden im Rahmen dieser Anmeldung so verwendet, dass eine Arbeitsmaschine mechanische Arbeit aufnimmt, um ihren Zweck zu erfüllen. Eine thermische Fluidenergie-Maschine, die als Arbeitsmaschine verwendet wird, wird somit als Verdichter oder als Kompressor verwendet. Demgegenüber verrichtet eine Kraftmaschine Arbeit, wobei eine thermische Fluidenergie-Maschine zur Verrichtung der Arbeit die im Arbeitsgas zur Verfügung stehende thermische Energie umwandelt. In diesem Fall wird die thermische Fluidenergie-Maschine also als Motor betrieben.

Der Begriff "thermische Fluidenergie-Maschine" bildet einen Oberbegriff von Maschinen, die einem Arbeitsfluid, im Zusammenhang mit dieser Anmeldung ein Arbeitsgas, thermische Energie entziehen oder diesem thermische Energie zuführen können. Unter thermischer Energie ist sowohl Wärmeenergie als auch Kälteenergie zu verstehen. Thermische Fluidenergie-Maschinen können beispielsweise als Kolbenmaschinen ausgeführt sein. Bevorzugt können auch hydrodynamische thermische Fluidenergie-Maschinen verwendet werden, deren Laufräder einen kontinuierlichen Fluss des Arbeitsgases erlauben. Vorzugsweise kommen axial wirkende Turbinen bzw. Verdichter zum Einsatz.

Das eingangs angegebene Prinzip ist beispielsweise gemäß der US 2010/0257862 A1 beschrieben. Hier kommen Kolbenmaschinen zum Einsatz, um das oben beschriebene Verfahren durchzuführen. Gemäß der US 5,436,508 ist es überdies bekannt, dass mittels der eingangs angegebenen Anlagen zur Speicherung thermischer Energie auch Überkapazitäten bei der Nutzung von Windenergie zur Herstellung elektrischen Stroms zwischengespeichert werden können, um diese im Bedarfsfall wieder abzurufen.

Die Aufgabe der Erfindung besteht darin, eine Anlage zur Speicherung von thermischer Energie der eingangs angegebenen Art bzw. Verfahren zur Wandlung von thermischer Energie (beispielsweise Wandlung von mechanischer in thermischer Energie mit anschließender Speicherung oder Wandlung der gespeicherten thermischen Energie in mechanische Energie) anzugeben, mit der bzw. mit dem ein hoher Wirkungsgrad bei gleichzeitig vertretbaren Aufwand der verwendeten Baueinheiten möglich ist.

Diese Aufgabe wird mit der eingangs angegebenen Anlage erfindungsgemäß dadurch gelöst, dass vor der ersten Fluidenergie-Maschine zusätzlich ein Niedertemperatur-Wärmespeicher in dem Kreislauf vorgesehen ist. Dieser Wärmespeicher wird als Niedertemperatur-Wärmespeicher bezeichnet, weil das durch die Speicherung der Wärme erreichte Temperaturniveau prinzipbedingt unter dem Temperaturniveau des Wärmespeichers liegt. Der Wärmespeicher könnte im Vergleich zum Niedertemperatur-Wärmespeicher somit im Sinne der Erfindung auch als Hochtemperatur-Wärmespeicher bezeichnet werden. Wärme ist weiterhin durch den Bezug der Umgebungstemperatur der Anlage definiert. Alles über Umgebungstemperatur ist Wärme während alles unterhalb der Umgebungstemperatur Kälte ist. Damit wird auch klar, dass das Temperaturniveau des Kältespeichers unterhalb der Umgebungstemperatur liegt.

Die Verwendung des Niedertemperatur-Wärmespeichers hat folgende Vorteile. Wird die Anlage zur Speicherung der thermischen Energie verwendet, so wird der Niedertemperatur-Wärmespeicher vor Passieren der in diesem Fall als Arbeitsmaschine (Verdichter) arbeitenden ersten Fluidenergie-Maschine durchlaufen. Hierdurch wird das Arbeitsgas bereits über Umgebungstemperatur aufgewärmt. Dies hat den Vorteil, dass die Arbeitsmaschine eine geringere Leistung aufnehmen muss, um die geforderte Temperatur des Arbeitsgases zu erreichen. Konkret soll der Wärmespeicher auf über 500°C aufgewärmt werden, was vorteilhaft anschließend an das Vorwärmen des Arbeitsgases auch mit technisch verfügbaren thermodynamischen Verdichtern erfolgen kann, die eine Verdichtung des Arbeitsgases auf 15 bar erlauben. Vorteilhaft kann daher auf Komponenten für die Baueinheiten der Anlage zurückgegriffen werden, die am Markt ohne kostspielige Modifikationen erhältlich sind.

Das Arbeitsgas kann wahlweise in einem geschlossenen oder einem offenen Kreislauf geführt werden. Ein offener Kreislauf verwendet als Arbeitsgas immer die Umgebungsluft. Diese wird aus der Umgebung angesaugt und am Ende des Prozesses auch wieder in diese entlassen, so dass die Umgebung den offenen Kreislauf schließt. Ein geschlossener Kreislauf erlaubt auch die Verwendung eines anderen Arbeitsgases als Umgebungsluft. Dieses Arbeitsgas wird in dem geschlossenen Kreislauf geführt. Da eine Entspannung in die Umgebung bei gleichzeitiger Einstellung des Umgebungsdruckes und der Umgebungstemperatur entfällt, muss das Arbeitsgas im Falle eines geschlossenen Kreislaufes durch einen Wärmetauscher geführt werden, der eine Abgabe bzw. Aufnahme von Wärme des Arbeitsgases an die Umgebung erlaubt.

Gemäß einer vorteilhaften Ausgestaltung der Erfindung ist vorgesehen, dass der Kreislauf als offener Kreislauf ausgebildet ist und die zweite thermische Fluidenergie-Maschine aus zwei Stufen aufgebaut ist, wobei zwischen den Stufen ein Wasserabscheider für das Arbeitsgas vorgesehen ist. Hierbei wird dem Umstand Rechnung getragen, dass in der Umgebungsluft Luftfeuchtigkeit enthalten ist. Durch eine Entspannung des Arbeitsgases in einer einzigen Stufe kann es dazu kommen, dass die Luftfeuchtigkeit aufgrund der starken Abkühlung des Arbeitsgases auf beispielsweise -114°C gefriert und hierbei die thermische Fluidenergie-Maschine beschädigt. Insbesondere können Turbinenschaufeln durch Vereisung nachhaltig beschädigt werden. Eine Entspannung des Arbeitsgases in zwei Schritten ermöglicht es jedoch, kondensiertes Wasser in einem Wasserabscheider hinter der ersten Stufe beispielsweise bei 5°C abzuscheiden, so dass dieses bei einer weiteren Abkühlung des Arbeitsgases in der zweiten Turbinenstufe bereits entfeuchtet ist und eine Eisbildung verhindert oder zumindest verringert werden kann. Vorteilhaft wird das Risiko einer Beschädigung der zweiten Fluidenergie-Maschine hiermit verringert.

Wird ein geschlossener Kreislauf verwendet und, wie bereits beschrieben, ein Wärmetauscher in den Kreislauf eingebaut, kann die Verwendung eines Wasserabscheiders sowie einer zweistufigen zweiten thermischen Fluidenergie-Maschine entfallen. Als Arbeitsgas kann in diesem Fall beispielsweise auch entfeuchtete Umgebungsluft verwendet werden, deren Befeuchtung durch die Geschlossenheit des Kreislaufes ausgeschlossen ist. Aber auch andere Arbeitsgase können Verwendung finden.

Eine besondere Ausgestaltung der erfindungsgemäßen Anlage sieht vor, dass mit der ersten thermischen Fluidenergie-Maschine eine dritte thermische Fluidenergie-Maschine und/oder mit der zweiten thermischen Fluidenergie-Maschine eine vierte thermische Fluidenergie-Maschine im Kreislauf parallel geschaltet ist. Dabei ist jeweils ein Ventilmechanismus zwischen der ersten und der dritten und/oder der zweiten und der vierten thermischen Fluidenergie-Maschine vorgesehen. Durch Schalten des Ventilmechanismus kann nun vorteilhaft je nach Durchflussrichtung des Arbeitsgases jeweils die eine oder die andere Fluidenergie-Maschine ausgewählt werden. Dies hat den Vorteil, dass die jeweilige zur Anwendung kommende Fluidenergie-Maschine auf den zu schaltenden Betriebszustand optimiert werden kann. Da bei Verwendung von lediglich zwei Fluidenergie-Maschinen beide in Abhängigkeit der Durchflussrichtung sowohl als Arbeitsmaschine als auch als Kraftmaschine verwendet werden müssen, kann ohne das Vorsehen von zusätzlichen Fluidenergie-Maschinen nur ein konstruktiver Kompromiss gewählt werden. Da jedoch sowohl im thermischen Ladebetrieb wie auch im thermischen Entladebetrieb ein möglichst hoher Wirkungsgrad angestrebt wird, erlaubt die Parallelschaltung von Fluidenergie-Maschinen, sowohl das Verfahren zur Speicherung der thermischen Energie als auch das Verfahren zur Umwandlung der thermischen Energie bei optimalem Wirkungsgrad vorzunehmen.

Die Lösung der Aufgabe gelingt überdies durch das eingangs genannte Verfahren zur Speicherung von thermischer Energie dadurch, dass vor der ersten Fluidenergie-Maschine ein Niedertemperatur-Wärmespeicher vom Arbeitsgas durchflossen wird. Das heißt, dass das Arbeitsgas durch den Niedertemperatur-Wärmespeicher aufgewärmt in die erste Fluidenergie-Maschine eingespeist wird. Hierdurch werden die bereits erläuterten Vorteile erreicht. Vorteilhaft kann das Arbeitsgas in dem Niedertemperatur-Wärmespeicher auf eine Temperatur zwischen 60°C und 100°C besonders vorteilhaft auf eine Temperatur von 80°C erwärmt werden. Wie bereits erwähnt, kann dann gemäß einer weiteren Ausgestaltung der Erfindung das Arbeitsgas auf höchstens 15 bar verdichtet werden, wodurch sich Temperaturen des Arbeitsgrades von bis zu 550°C erreichen lassen.

Genauso wird Aufgabe durch das eingangs genannte Verfahren zur Umwandlung von thermischer Energie dadurch gelöst, dass (bei umgekehrter Flussrichtung des Arbeitsgases) hinter der ersten Fluidenergie-Maschine ein Niedertemperatur-Wärmespeicher vom Arbeitsgas durchflossen wird. Hierbei handelt es sich bezogen auf die verwendete Anlage natürlich um denselben Niedertemperatur-Wärmespeicher, der bei dem oben erwähnten Verfahren zur Speicherung der thermischen Energie verwendet wird. Dies hat nämlich den Vorteil, dass nach einem Vorgang zur Umwandlung der thermischen Energie der Niedertemperatur-Wärmespeicher wieder aufgeladen wird, während der Wärmespeicher und der Kältespeicher entladen werden. Wird der Prozess in einem Verfahren zur Speicherung von thermischer Energie wieder umgekehrt, so steht die in Niedertemperatur-Wärmespeicher zwischengespeicherte Energie nun zur Vorwärmung des Arbeitsgases zur Verfügung. Nur bei Inbetriebnahme der Anlage muss die Wärme beim erstmaligen Durchlaufen des Verfahrens zur Speicherung thermischer Energie auf anderem Wege zur Verfügung gestellt werden, da diese vorher noch nicht durch ein Verfahren zur Umwandlung der thermischen Energie zur Verfügung gestellt werden konnte. Wird diese sonst im Niedertemperatur-Wärmespeicher gespeicherte Energie nicht zur Verfügung gestellt, so funktioniert das Verfahren zur Speicherung von thermischer Energie dennoch, wenn auch nicht mit dem gewünschten Wirkungsgrad. Allerdings wird bei mehrfacher Umkehrung des Prozesses der geforderte Sollzustand der Anlage auch ohne Hinzuziehung von Fremdenergie erreicht.

Vorteilhaft kann das Arbeitsgas in dem Niedertemperatur-Wärmespeicher auf eine Temperatur zwischen 100°C und 160°C erwärmt werden. Besonders vorteilhaft ist eine Erwärmung auf 130°C. Vorteilhaft ist dabei weiterhin, wenn das Arbeitsgas durch die zweite thermische Fluidenergie-Maschine auf höchstens 10 bar verdichtet wird. Auch hierbei handelt es sich um einen sinnvollen technischen Kompromiss bei der Abwägung zwischen Aufwand und Nutzen.

Weitere Einzelheiten der Erfindung werden nachfolgend anhand der Zeichnung beschrieben. Gleiche oder sich entsprechende Zeichnungselemente sind hierbei jeweils mit denselben Bezugzeichen versehen und werden nur insoweit mehrfach erläutert, wie sich Unterschiede zwischen den einzelnen Figuren ergeben. Es zeigen:

Figur 1          ein Ausführungsbeispiel der erfindungsgemäßen Anlage als Schaltbild und

Figur 2 und 3     Ausführungsbeispiele des erfindungsgemäßen Verfahrens anhand von weiteren Schaltbildern.

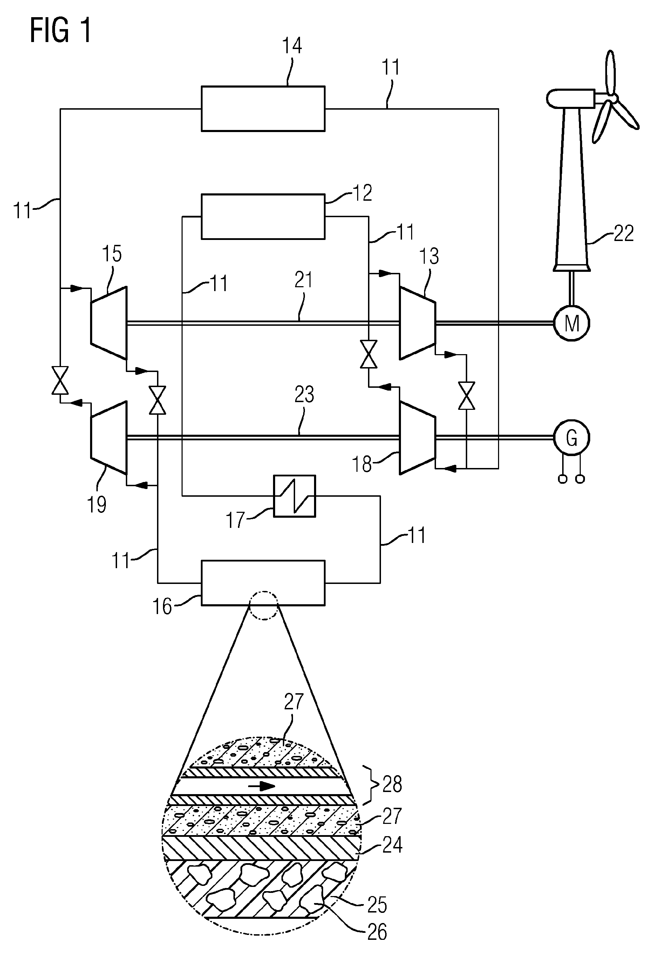

Eine Anlage zur Speicherung thermischer Energie gemäß Figur 1 weist eine Leitung 11 auf, mit der mehrere Einheiten derart miteinander verbunden sind, dass diese durch ein Arbeitsgas durchflossen werden können. Das Arbeitsgas fließt durch einen Niedertemperatur-Wärmespeicher 12 und anschließend durch eine erste thermische Fluidenergie-Maschine 13, die als hydrodynamischer Verdichter ausgebildet ist. Weiterhin führt die Leitung dann zu einem Wärmespeicher 14. Dieser ist mit einer zweiten thermischen Fluidenergie-Maschine 15 verbunden, welche als hydrodynamische Turbine ausgeführt ist. Von der Turbine führt die Leitung 11 zu einem Kältespeicher 16. Der Kältespeicher 16 ist mit dem Niedertemperatur-Wärmespeicher 12 durch die Leitung 11 verbunden, wobei in diesem Leitungsabschnitt außerdem ein Wärmetauscher 17 vorgesehen ist, über den das Arbeitsgas Wärme an die Umgebung abgeben oder aus der Umgebung aufnehmen kann (je nach Betriebsart).

In Figur 1 ist insofern ein geschlossener Kreislauf für das Arbeitsgas vorgesehen. Allerdings ist es in gleicher Weise vorstellbar, dass in nicht dargestellter Weise der Leitungsabschnitt zwischen dem Kältespeicher 16 und dem Niedertemperatur-Wärmespeicher 12 mitsamt dem Wärmetauscher 17 entfällt. In diesem Fall würde der Kreislauf über die Umgebung geschlossen werden, wobei das Arbeitsgas, welches in diesem Fall aus Umgebungsluft besteht, am Niedertemperatur-Wärmespeicher 12 angesaugt und nach dem Kältespeicher 16 wieder in die Umgebung ausgeblasen würde.

Weiterhin ist in Figur 1 eine dritte thermische Fluidenergie-Maschine 18 in Form einer hydrodynamischen Turbine und eine vierte thermische Fluidenergie-Maschine 19 in Form eines hydrodynamischen Verdichters vorgesehen. Zu bemerken ist weiterhin, dass die erste hydrodynamische Fluidenergie-Maschine 13 in der Leitung 11 mit der dritten hydrodynamischen Fluidenergie-Maschine 18 parallel geschaltet ist und die zweite Fluidenergie-Maschine 15 in der Leitung 11 mit der vierten Fluidenergie-Maschine 19 parallel geschaltet ist. Ventilmechanismen 20 sorgen durch Öffnen und Schließen dafür, dass jeweils nur die erste und zweite Fluidenergie-Maschine oder die dritte und vierte Fluidenergie-Maschine durchflossen werden. Die erste und zweite Fluidenergie-Maschine 13 und 15 sind über eine erste Welle 21 mechanisch miteinander gekoppelt und werden durch einen elektrischen Motor M angetrieben, der von einem Windkraftwerk 22 gespeist wird, solange die erzeugte elektrische Energie im Stromnetz nicht nachgefragt wird. Während dieses Betriebszustandes werden der Wärmespeicher 14 und der Kältespeicher 16 aufgeladen, wie später noch genauer erläutert wird. Ist die Nachfrage an elektrischer Energie im Verhältnis zur aktuell erzeugten Menge an elektrischer Energie größer, so wird der durch das Windkraftwerk 22 erzeugte Strom direkt in das Netz eingespeist. Zusätzlich unterstützt die Anlage in einem anderen Betriebszustand die Stromerzeugung, indem der Wärmespeicher 14 und der Kältespeicher 16 entladen werden und mit einer zweiten Welle 23 durch die Fluidenergie-Maschinen 18 und 19 ein Generator G angetrieben wird. Die zweite Welle 23 ist dazu mechanisch mit der dritten Fluidenergie-Maschine 18 und der vierten Fluidenergie-Maschine 19 gekoppelt.

Der Aufbau des Niedertemperatur-Wärmespeichers 12, des Wärmespeichers 14 und des Kältespeichers 16 bei der Anlage gemäß Figur 1 ist jeweils gleich und wird durch eine Ausschnittsvergrößerung anhand des Kältespeichers 16 näher erläutert. Vorgesehen ist ein Behälter, dessen Wand 24 mit einem Isolationsmaterial 25 versehen ist, welches große Poren 26 aufweist. Im Inneren des Behälters ist Beton 27 vorgesehen, der als Wärmespeicher oder Kältespeicher fungiert. Innerhalb des Betons 27 sind Rohre 28 parallel verlaufend verlegt, durch die das Arbeitsgas strömt und dabei Wärme abgibt oder Wärme aufnimmt (je nach Betriebsart und Speicherart).

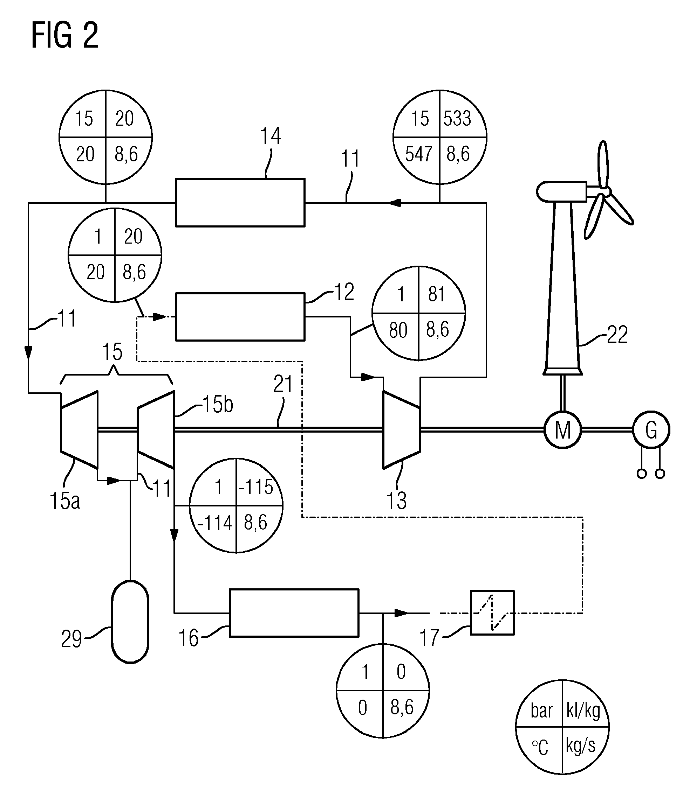

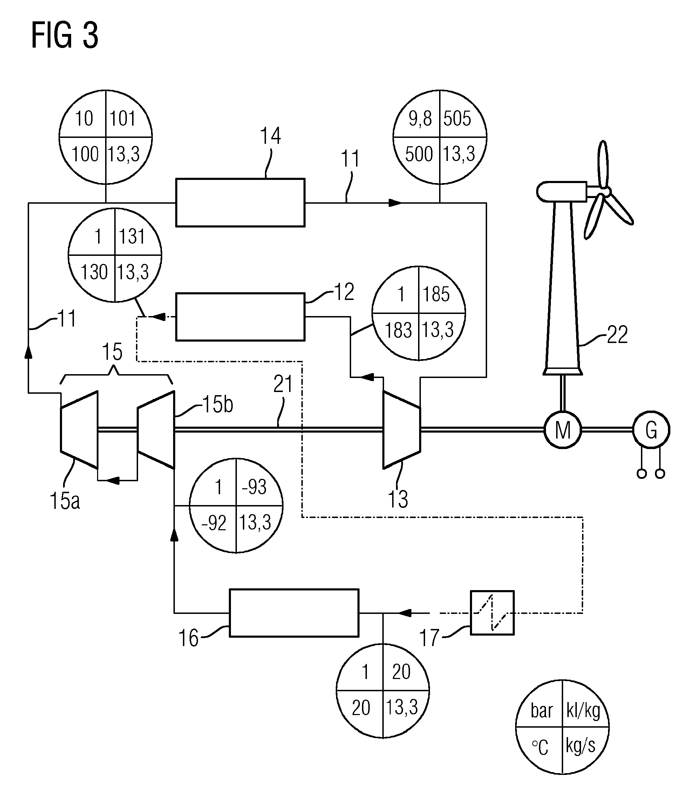

Anhand der Anlage gemäß den Figuren 2 und 3 sollen der thermische Auflade- und Entladeprozess näher erläutert werden. In Figur 2 ist zunächst der Ladeprozess dargestellt, der nach dem Prinzip einer Wärmepumpe funktioniert. Dargestellt ist im Unterschied zu Figur 1 in den Figuren 2 und 3 ein offener Kreislauf, der jedoch, wie strichpunktiert angedeutet, unter Einsatz des optional vorgesehenen Wärmetauschers 17 geschlossen werden könnte. Die Zustände im Arbeitsgas, welche bei dem Ausführungsbeispiel der Figuren 2 und 3 aus Luft besteht, sind jeweils an den Leitungen in Kreisen dargestellt. Links oben ist der Druck in bar angegeben. Rechts oben wird die Entalpie in KJ/Kg angegeben. Links unten steht die Temperatur in °C und rechts unten wird der Massefluss in Kg/s angegeben. Die Flussrichtung des Gases ist durch Pfeile in der Leitung 11 angedeutet.

In der Modellrechnung gelangt das Arbeitsgas mit einem bar und 20°C in den (vorher aufgeladenen) Niedertemperatur-Wärmespeicher und verlässt diesen mit einer Temperatur von 80°C. Durch Komprimierung mittels der als Verdichter arbeitenden ersten Fluidenergie-Maschine 13 kommt es zu einer Druckerhöhung auf 15 bar und infolgedessen auch zu einer Temperaturerhöhung auf 547°C. Dieser Berechnung liegt folgende Formel zugrunde

$$T_2 = T_1 + (T_{2s} - T_1)/\eta_c; \quad T_{2s} = T_1 \Pi^{(K-1)/K},$$

wobei
$T_2$ die Temperatur am Verdichterausgang,
$T_1$ die Temperatur am Verdichtereingang,
$\eta_c$ der isentropische Wirkungsgrad des Kompressors,
n das Druckverhältnis (hier 15:1) und
K die Kompressibilität ist, die bei Luft 1,4 beträgt.

Der isentropische Wirkungsgrad $\eta_c$ kann einem Kompressor mit 0,85 vorausgesetzt werden.

Das erhitzte Arbeitsgas durchläuft nun den Wärmespeicher 14, wo der Hauptteil der verfügbaren thermischen Energie gespeichert wird. Während der Speicherung kühlt sich das Arbeitsgas auf 20°C ab, während der Druck (abgesehen von strömungsbedingten Druckverlusten) mit 15 bar erhalten bleibt. Anschließend wird das Arbeitsgas in zwei in Serie geschalteten Stufen 15a, 15b einer zweiten Fluidenergie-Maschine entspannt, so dass es auf einem Druckniveau von einem bar anlangt. Dabei kühlt sich das Arbeitsgas nach der ersten Stufe auf 5°C und nach der zweiten Stufe auf -114°C ab. Grundlage für diese Berechnung ist ebenfalls die oben angegebene Formel.

In den Teil der Leitung 11, der die beiden Stufen der zweiten Fluidenergie-Maschine 15a, 15b in Form einer Hochdruckturbine und einer Niederdruckturbine verbindet, ist zusätzlich ein Wasserabscheider 29 vorgesehen. Dieser ermöglicht nach einer ersten Entspannung eine Trocknung der Luft, so dass die in dieser enthaltene Luftfeuchtigkeit in der zweiten Stufe 15b der zweiten Fluidenergie-Maschine 15 nicht zu einer Vereisung der Turbinenblätter führt.

Im weiteren Verlauf entzieht das entspannte und daher abgekühlte Arbeitsgas dem Kältespeicher 16 Wärme und wird dadurch auf 0°C erwärmt. Auf diesem Weg wird Kälteenergie im Kältespeicher 16 gespeichert, die bei einer anschließenden Energiegewinnung genutzt werden kann. Vergleicht man die Temperatur des Arbeitsgases am Ausgang des Kältespeichers 16 und am Eingang des Niedertemperatur-Wärmespeichers 12, so wird deutlich, warum für den Fall eines geschlossenen Kreislaufs der Wärmetauscher 17 zur Verfügung gestellt werden muss. Hier kann das Arbeitsgas wieder auf Umgebungstemperatur von 20°C aufgewärmt werden, wodurch der Umgebung Wärme entzogen wird, die dem Prozess zur Verfügung gestellt wird. Eine solche Maßnahme kann selbstverständlich entfallen, wenn das Arbeitsgas direkt aus der Umgebung angesaugt wird, da dies bereits Umgebungstemperatur aufweist.

Mittels Figur 3 kann der Entladezyklus des Wärmespeichers 14 und des Kältespeichers 16 nachvollzogen werden, wobei am Generator G elektrische Energie erzeugt wird. Anders als in Figur 1 werden in Figur 3 die erste Fluidenergie-Maschine 13 und die zweite (zweistufige) Fluidenergie-Maschine 15 sowohl im Lade- als auch im Entladezyklus verwendet. Dies beeinträchtigt das Funktionsprinzip der Anlage nicht, wird allerdings durch einen geringeren Wirkungsgrad erkauft. Abzuwägen sind daher der höhere Investitionsaufwand bei Verwendung zusätzlich einer dritten und einer vierten Fluidenergie-Maschine gegenüber dem Gewinn an Wirkungsgrad, der dadurch erreicht wird, dass bei Verwendung von vier Fluidenergie-Maschinen jede auf den entsprechenden Betriebszustand optimiert werden kann. Weiterhin ist wieder strichpunktiert die Alternative eines geschlossenen Kreislaufes dargestellt. Der Wasserabscheider 29 ist in der Darstellung gemäß Figur 3 nicht dargestellt, da dieser nicht zum Einsatz gelangt.

Das Arbeitsgas wird durch den Kältespeicher 16 geleitet. Dabei wird es von 20°C auf -92°C abgekühlt. Diese Maßnahme dient zur Reduzierung der Leistungsaufnahme, um die als Kompressor arbeitende zweite Fluidenergie-Maschine zu betreiben. Die Leistungsaufnahme wird um den Faktor entsprechend des Temperaturunterschiedes in Kelvin also 293K/181K = 1,62 reduziert. In dem Beispiel komprimiert der Kompressor das Arbeitsgas auf 10 bar. Hierbei steigt die Temperatur auf 100°C. Technisch vertretbar wäre auch eine Kompression von bis zu 15 bar. Das komprimierte Arbeitsgas durchläuft den Wärmespeicher 14 und wird dadurch auf 500°C aufgeheizt, wobei der Druck leicht auf 9,8 bar abnimmt. Anschließend wird das Arbeitsgas durch die erste Fluidenergie-Maschine entspannt, die somit in diesem Betriebszustand als Turbine arbeitet. Es erfolgt eine Entspannung auf 1 bar, wobei am Ausgang der ersten Fluidenergie-Maschine immer noch eine Temperatur von 183°C im Arbeitsgas vorliegt.

Um diese Restwärme ebenfalls ausnutzen zu können, wird das Arbeitsgas anschließend durch den Niedertemperatur-Wärmespeicher geleitet und kühlt sich dadurch noch auf 130°C ab. Diese Wärme muss gespeichert werden, um in einem nachfolgenden Ladeprozess des Wärmespeichers 14 und des Kältespeichers 16 zur Vorwärmung des Arbeitsgases auf 80°C zu dienen (wie oben bereits beschrieben). Der Niedertemperatur-Wärmespeicher arbeitet somit als Zwischenspeicher und wird immer gerade dann aufgeladen, wenn die beiden anderen Speicher, d. h. der Wärmespeicher 14 und der Kältespeicher 16 entladen werden und anders herum.

**Patentansprüche**

1. Anlage zur Speicherung thermischer Energie, die einen Kreislauf für ein Arbeitsgas aufweist, wobei in dem Kreislauf folgende Einheiten in der angegebenen Reihenfolge durch eine Leitung (11) für das Arbeitgas miteinander verbunden sind:

    ● eine erste thermische Fluidenergie-Maschine (13),
    ● in Wärmespeicher (14),
    ● eine zweite thermische Fluidenergie-Maschine (15) und
    ● ein Kältespeicher (16),

    wobei in Durchflussrichtung des Arbeitsgases vom Wärmespeicher (14) zum Kältespeicher (15) gesehen die erste thermische Fluidenergie-Maschine (13) als Arbeitsmaschine und die zweite thermische Fluidenergie-Maschine (15) als Kraftmaschine geschaltet ist,
    **dadurch gekennzeichnet,**
    **dass** vor der ersten Fluidenergie-Maschine (13) ein Niedertemperatur-Wärmespeicher (12) in dem Kreislauf vorgesehen ist.

2. Anlage nach Anspruch 1,
    **dadurch gekennzeichnet,**
    **dass** der Kreislauf als offener Kreislauf ausgebildet ist und die zweite thermische Fluidenergie-Maschine (15) aus zwei Stufen (15a, 15b) aufgebaut ist, wobei zwischen den Stufen (15a, 15b) ein Wasserabscheider (29) für das Arbeitsgas vorgesehen ist.

3. Anlage nach Anspruch 1,
    **dadurch gekennzeichnet,**
    **dass** der Kreislauf als geschlossener Kreislauf ausgeführt ist und zwischen dem Kältespeicher (16) und dem Niedertemperatur-Wärmespeicher (12) ein Wärmetauscher (17) im Kreislauf angeordnet ist.

4. Anlage nach einem der Ansprüche 1 bis 3,
    **dadurch gekennzeichnet,**
    **dass** mit der ersten thermischen Fluidenergie-Maschine (13) eine dritte thermische Fluidenergie-Maschine (18) und/oder mit der zweiten thermischen Fluidenergie-Maschine (15) eine vierte thermische Fluidenergie-Maschine (19) im Kreislauf parallel geschaltet ist, wobei jeweils ein Ventilmechanismus (20) zwischen der ersten und der dritten und/oder der zweiten und der vierten thermischen Fluidenergie-Maschine vorgesehen ist.

5. Verfahren zur Speicherung von thermischer Energie, bei dem ein Arbeitsgas einen Kreislauf durchläuft, wobei in dem Kreislauf folgende Einheiten in der angegebenen Reihenfolge durchflossen werden:

    ● eine erste thermische Fluidenergie-Maschine (13),
    ● ein Wärmespeicher (14),
    ● eine zweite thermische Fluidenergie-Maschine (15) und
    ● ein Kältespeicher (16),

    wobei die erste thermische Fluidenergie-Maschine (13) als Arbeitsmaschine und die zweite thermischen Fluidenergie-Maschine (15) als Kraftmaschine betrieben wird,
    **dadurch gekennzeichnet,**
    **dass** vor der ersten Fluidenergie-Maschine (13) ein Niedertemperatur-Wärmespeicher (12) vom Arbeitsgas durchflossen wird.

6. Verfahren nach Anspruch 5,
    **dadurch gekennzeichnet,**
    **dass** das Arbeitsgas in dem Niedertemperatur-Wärmespeicher auf eine Temperatur zwischen 60 °C und 100 °C, insbesondere auf 80 °C erwärmt wird.

7. Verfahren nach Anspruch 5 oder 6,
    **dadurch gekennzeichnet,**
    **dass** das Arbeitsgas durch die erste thermische Fluidenergie-Maschine auf höchstens 20 bar, bevorzugt höchstens 15 bar, verdichtet wird.

8. Verfahren zur Umwandlung von thermischer Energie, bei dem ein Arbeitsgas einen Kreislauf durchläuft, wobei in dem Kreislauf folgende Einheiten in der angegebenen Reihenfolge durchflossen werden:

- ● ein Kältespeicher (16),
- ● eine zweite thermische Fluidenergie-Maschine (15) und
- ● ein Wärmespeicher (14),
- ● eine erste thermische Fluidenergie-Maschine (13),

wobei die erste thermische Fluidenergie-Maschine (13) als Kraftmaschine und die zweite thermischen Fluidenergie-Maschine (15) als Arbeitsmaschine betrieben wird, **dadurch gekennzeichnet,**
**dass** hinter der ersten Fluidenergie-Maschine (13) ein Niedertemperatur-Wärmespeicher (12) vom Arbeitsgas durchflossen wird.

9. Verfahren nach Anspruch 5,
**dadurch gekennzeichnet,**
**dass** das Arbeitsgas in dem Niedertemperaturspeicher auf eine Temperatur zwischen 100 °C und 160 °C, insbesondere auf 130 °C abgekühlt wird.

10. Verfahren nach Anspruch 5 oder 6,
**dadurch gekennzeichnet,**
**dass** das Arbeitsgas durch die zweite thermische Fluidenergie-Maschine auf höchstens 15 bar, bevorzugt höchstens 10 bar, verdichtet wird.

FIG 1

## FIG 2

# FIG 3

# EP 2 574 739 A1

**Europäisches Patentamt**
**European Patent Office**
**Office européen des brevets**

## EUROPÄISCHER RECHERCHENBERICHT

Nummer der Anmeldung

EP 11 18 3270

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 2 922 608 A1 (SAIPEM S A SA [FR] SAIPEM SA [FR]) 24. April 2009 (2009-04-24) * Seite 10, Zeile 12 - Zeile 29; Abbildungen 1a,1b * ----- | 1,3,5,6, 8,9 | INV. F01K3/12 F03D9/00 F25B9/00 F25B27/00 |
| X | WO 2009/044139 A2 (ISENTROPIC LTD [GB]; MACNAGHTEN JAMES [GB]; HOWES JONATHAN SEBASTIAN []) 9. April 2009 (2009-04-09) * Abbildung 1 * ----- | 1,3,5,8 | F25B30/02 |

**RECHERCHIERTE SACHGEBIETE (IPC)**

F01K
F03D
F25B

Der vorliegende Recherchenbericht wurde für alle Patentansprüche erstellt

| Recherchenort | Abschlußdatum der Recherche | Prüfer |
|---|---|---|
| München | 10. August 2012 | Coquau, Stéphane |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 18 3270

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

10-08-2012

| Im Recherchenbericht angeführtes Patentdokument | Datum der Veröffentlichung | Mitglied(er) der Patentfamilie | Datum der Veröffentlichung |
|---|---|---|---|
| FR 2922608 A1 | 24-04-2009 | AU 2008315867 A1<br>CA 2702915 A1<br>CN 101828319 A<br>EP 2203967 A1<br>FR 2922608 A1<br>JP 2011501026 A<br>US 2010218500 A1<br>WO 2009053593 A1 | 30-04-2009<br>30-04-2009<br>08-09-2010<br>07-07-2010<br>24-04-2009<br>06-01-2011<br>02-09-2010<br>30-04-2009 |
| WO 2009044139 A2 | 09-04-2009 | CA 2701526 A1<br>CN 101883913 A<br>EP 2220343 A2<br>JP 2010540831 A<br>US 2010251711 A1<br>US 2010257862 A1<br>WO 2009044139 A2 | 09-04-2009<br>10-11-2010<br>25-08-2010<br>24-12-2010<br>07-10-2010<br>14-10-2010<br>09-04-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20100257862 A1

- US 5436508 A